# EUROPEAN PATENT SPECIFICATION

(11) **EP 2 643 518 B1**
(45) Date of publication and mention of the grant of the patent: **17.09.2014**
(21) Application number: 11826172.6
(22) Date of filing: 22.11.2011
(51) Int. Cl.: B01D 35/28, B07B 1/46, D21D 5/16

(54) **A METHOD OF MANUFACTURING A SCREEN CYLINDER AND A SCREEN CYLINDER**
VERFAHREN ZUR HERSTELLUNG EINES SIEBZYLINDERS UND SIEBZYLINDER
PROCÉDÉ DE FABRICATION D'UN CYLINDRE DE TAMISAGE ET CYLINDRE DE TAMISAGE

(30) Priority: 23.11.2010 FI 20106231
(43) Date of publication of application: 02.10.2013
(73) Proprietor: Aikawa Fiber Technologies Trust, Sherbrooke, QC JIM 2C3 (CA)
(72) Inventor: ASIKAINEN, Aku, FI-78610 Varkaus (FI); LUUKKONEN, Markku, FI-78310 Varkaus (FI)
(74) Representative: Ansala, Jyrki Matti
(86) International application number: PCT/FI2011/051025
(87) International publication number: WO 2012/069699

(56) References cited:
- WO-A1-00/38849
- DE-A1-102004 047 949

## Description

The present invention relates to a method of manufacturing a screen cylinder, and a screen cylinder that is particularly suitable for screening, filtering, fractionating, or sorting cellulose pulp suspensions of the pulp and paper making industry, or other similar suspensions. The present invention is especially suitable for the manufacture of screening devices of the type comprising either a plurality of screen wires positioned at a small spacing parallel to each other, the plurality of screen wires forming a screening surface facing the pulp suspension to be screened and adjacent wires forming screening openings in the form of slots therebetween allowing an accept portion of the pulp suspension to flow therethrough or a perforated sheet metal mat. The present invention discusses in particular the manufacture of the connecting rings of a screen cylinder, i.e. rings via which the screen cylinder is connected to the surrounding screen cylinder housing or to another screen cylinder in cases where the screening member is formed of more than one screen cylinder section positioned axially one on top of the other. Thus a connecting ring may be positioned at either the mid portion of a screening member or at an end thereof. In the latter case the connecting ring is most often called an end ring.

The pressure screens (as a general example, U.S. Pat. No. 4,634,521) used in the wood processing industry most often comprise a stationary screen basket or screen cage or screen cylinder within a substantially cylindrical outer housing having an inlet for suspension to be screened, and outlets for both the accept and the reject. Other inlets and outlets may also be provided, for example, inlet/s for dilution liquid to be fed into the apparatus, and an outlet for light rejects, most often plastics separated in the apparatus. In most cases, the apparatus is installed in an upright position so that the axis of the substantially cylindrical housing is substantially vertical. Then the top cover of the apparatus is easy to open or detach from the essentially cylindrical housing whereby the maintenance of the apparatus is easy. However, screening apparatus having an inclined or horizontally positioned axis or shaft exist, too. The shaft of the apparatus passes through the end of the apparatus opposite to the top cover, i.e. normally through the lower end, and usually rotates a rotor, although in some screens the screen cylinder itself is rotatable. Inside the cylindrical housing, there is, in addition to the rotor, also a screen or a sieve cylinder, which in most cases is cylindrical, although a few cone-shaped screen baskets have also been proposed. Usually the screen cylinder is located in the radial direction outside the rotor, though also other constructions exist. The screen cylinder is supported to the housing at both of its ends, and sometimes also at its mid-portion, via support flanges. The support flanges are, when it is a question of an outflow screen i.e. the accept passing the screen cylinder outwardly, most often integral parts of the housing. The screen housing is most often substantially cylindrical, is often made by casting and has at least two support flanges extending radially inwardly from its inner surface. The screen housing may be made of rolled steel plate, too, and in that case the support flanges are welded on the inside of the housing. The screen cylinder may also be built of at least two parts or sections, which are connected to each other at their ends by means of said connecting rings. The screen cylinder is connected to the support flanges at least at both of its ends via so-called end rings, or connecting rings.

The connecting rings have been, naturally, used in cases of both milled or drilled screen cylinders and so-called wedge wire screen cylinders. In milled screen cylinders the screen surface is made of sheet metal in which sorting slots have been machined. In drilled screen cylinders the screening openings are round holes. The surface facing the fiber suspension to be treated i.e. the so called screening surface has in many cases been provided with grooves or ribs for creating turbulence in front of the screening openings to enhance the screening. The so-called wedge wire screen cylinders are such that the sheet metal screen of the milled or drilled screen cylinders is replaced with a screen made of profiled wires arranged side by side leaving a gap, so called screening slot therebetween. The profiled wires, which are often called wedge wires, are most often manufactured of steel by rolling and/or drawing. The cross section of the wires is such that the final screening surface resembles the milled cylinder. In other words, the wires often have on their screening surface, i.e. on the side facing the fiber suspension to be screened, also known as the "feed side", a longitudinal ridge so that the screening slot left between two adjacent wires is positioned substantially at the bottom of the groove left between the ridges of two adjacent wires. The profiled wires are normally arranged in the axial direction of the screen cylinder, though also spirally or circumferentially arranged wires have been suggested.

The wires of a wedge wire screen cylinders have been attached to support elements that are arranged on the faces of the wires opposite to the screening surface such that a cylindrical screening element is formed. The milled or drilled sheet metal screening elements are structurally so weak that they need additional support elements to maintain their round shape and mechanical integrity. Thus in both screen types the support elements are most often circular rings, which are attached in radial planes at regular intervals on the screen element or screen cylinder surface at the accepts side of the cylinder (the side opposite the aforementioned "feed side") along the entire length of the cylinder. The cross section of a support element is normally rectangular, though also other shapes have been suggested, including U-shape, round and triangular shapes.

As to the support elements there is a couple of ways to manufacture such. One way is to manufacture such from a metal bar, which is dimensioned in an appropriate manner, by bending the bar to circular form, and welding the ends together. The bending and welding may be done either before or after fastening the screen wires to the support elements when it is a question of the manufacture of a wedge wire screen element or cylinder. Another way is to prefabricate the support elements in the form of circular rings, for instance by cutting the rings from suitable metal plate. When manufacturing a milled screen element, the support rings are normally fastened to the screen element after the element has been rolled into cylindrical shape.

Coming back to the connecting rings, or in a more limited sense end rings, called also as top and bottom rings, they are normally of somewhat sturdier structure than the support elements and support rings, as they need to transfer the various loads subjected to the screen cylinder during screening to the screen housing.

There are at least four different ways used for fastening or arranging the screen cylinder in the screen housing, two different ways for the top end and two for the bottom end. In the following, only top and bottom rings are discussed, though the discussion applies also to the connecting rings arranged on mid-portion of the screen cylinder. The connecting rings are treated most often in a similar manner as the bottom rings.

The first way is to arrange the screen cylinder, in a way, floating at its bottom end. In other words, both the bottom end ring of the screen cylinder and the cooperating support flange have axially extending cylindrical surfaces facing each other. Since there has to be a gap between the surfaces for the installation of the screen cylinder within the support flange, usually the end ring of the screen cylinder is provided with a circumferential groove and an O-ring placed in the groove for sealing the gap. The rotation of the cylinder along with the rotor is normally prevented by bolting the cylinder to the support flange at its opposite end. Sometimes specific pins have been arranged to run from the screen cylinder end ring/rings to the support flange to prevent the rotation.

A second way of fastening or supporting the bottom end of a screen cylinder to the bottom support flange is to arrange a conical seating surface at the inner rim of the lower support flange. The conical seating surface opens upwardly, and is coaxial with the axis of the rotor. The lower end ring or the bottom ring of the screen cylinder is provided with a corresponding conical seating surface so that the screen cylinder is positioned centrally in relation to the rotor of the screening apparatus. The mid-part of the screen cylinder may be supported by means of a similar connecting ring/support flange combination to the screen housing.

A first way to attach the upper end of the screen cylinder to the support flange is to bolt the upper flange-like connecting ring onto the support flange.

A second way of fastening the upper end of the screen cylinder to the support flange is to use a separate clamping or centering ring at the top end of the screen cylinder. In other words, the actual end ring at the upper end of the screen cylinder is an upwardly tapering ring whereby, in an ideal situation, the ring is not only similar to, but identical with the bottom ring. The actual fastening of the screen cylinder to the housing takes place by using a centering ring that has a corresponding tapering surface and another surface acting in cooperation with a counter surface in the support flange. Thus by bolting the centering ring on the support flange between the support flange and the end ring centers the screen cylinder in place. As an example of such fastening US-4,634,521 may be mentioned.

The connecting rings have been manufactured thus far from steel, as steel has been the easiest material to machine and to join the various parts together. This has been especially true when the screen cylinders were made of sheet metal as welding the end rings on a steel cylinder offered an easy, cheap and reliable way of fastening the two parts together. Now that the wedge wire screen cylinders have become predominant in the market, the fastening of an end ring or a connecting ring to the wedge wire screen cylinder has proven to be problematic. Welding that has been used in fastening the end rings to machined sheet metal cylinders is not the best possible way of fastening anything to wedge wire screen surfaces. The reason is that, in addition to changing the properties of the metal material of the screen wires due to high temperature, the welding of the wires to the end ring results in a relatively stiff fastening, which greatly limits the flexibility of a screen cylinder resulting from either flexing due to the forces applied in screening or because of small differences in the fit between the connecting rings and the intermediate rings. Wedge wire screen cylinders are to some extent flexible and the wires have a slight tendency to move either alone or in groups especially when the screen cylinder is attached to the support flanges. Thus the interface between the welded connecting ring and wedge wire mat is a potential location for a screen failure. The minor movements in the screen cylinder and/or stress caused by the installation of the screen cylinder may break the stiff fastening or the screen wires close to it, especially as the metal material of the screen wires has been hardened during welding.

Yet another problem relating to welding the connecting rings onto the wedge wires is the decrease in the diameter of the connecting ring after the welding. It is a characteristic feature of welding that the diameter of a welded circular ring is smaller after welding than before. This results in that the screen cylinders will be somewhat barrel-shaped after the connecting or end rings have been welded onto the ends of wedge wires unless the shrinkage of the connecting ring after the welding has been taken into account when originally manufacturing the connecting or end rings. Thus the manufacture of a connecting or end ring is a somewhat cumbersome and challenging task.

However, prior art knows screening or sorting baskets or sieves having end or connecting rings that are at least partially made of non-weldable material, whereby the welding of the rings to the ends of the screen wires do not pose a problem. Such end or connecting rings are made at least partially of thermoset plastic or composite materials. For instance EP-A1-0512873 or US-A-5,255,791 discusses a sieve made by winding U-shaped sheet metal screening element strips spirally, and welding the strips along their edges together to create a screen cylinder. The end ring, which must form a plane perpendicular to the axis of the cylinder or basket, is made in a mold into which the end of the cylinder is inserted. The mold is a hollow substantially U- shaped circular sheet metal channel, whose cross-section corresponds to that of the end ring of a screen cylinder. In other words, the mold gives the connecting or end ring its final shape and size. Furthermore, the mold has at the bottom thereof upwardly extending cores for arranging openings through the end ring. The openings are utilized in the installation of the screen cylinder in the sorter i.e. for fastening the screen cylinder to the support flange by means of bolts. The screen cylinder-end ring combination is manufactured such that the U-shaped mold is installed on a horizontal table; the sieve cylinder is introduced therein vertically and maintained suspended in this position at a predetermined level in the mold. Then the mold is filled with a hardenable plastic or thermoset plastic or composite material. After a certain setting time the screen cylinder equipped with an end or connecting ring is removed from the mold, and the operation may be started over again for the opposite end of the cylinder. Naturally, if the end rings are not similar at both ends of the screen cylinder, the same mold cannot be used.

EP-A1-1161308 discusses a screen cylinder basically similar to the EP-A1-0512873 except that the screen cylinder has been provided with special locking anchors for increasing the contact surface between the screen cylinder and the moulded end ring material. The end rings are made of polymer, fiberglass or composite material.

In other words, the prior art documents referred above discuss the manufacture of a screen cylinder having an end ring being made of plastic or composite materials only. However, in spite of the fact that the idea of full plastic or composite end ring is attractive, it is, in practice, not applicable. Firstly, as soon as the end ring has to be used for bolting or otherwise fastening the screen cylinder to the support flange by using fasteners running in the end ring material and subjecting the end ring material to different mechanical loads, such an applicable material that is reliable enough is hard, if not impossible, to find. And secondly even if such a material is found, it may easily prove to be too expensive as the competing steel is in any case relatively cheap.

FI-A1-20041567 discusses a wedge wire screen cylinder having an end ring made of composite materials and having preferably several different layers. A starting point of the invention discussed in the FI- document is that at least one support ring, i.e. the one closest to an axial end of a screen cylinder is arranged as a part of the end or connecting ring of the invention. Thus the end or connecting ring is formed by embedding the at least one support ring in the composite material. The FI- document also discusses an end ring embedding at least partially two support rings having reinforcing rings thereon such that the composite material is applied between the reinforcing rings forming the body part of the end ring. Thus the end ring of prior art may have its both radial "flange surfaces" covered with metal.

As already discussed above, a problem with the present wedge wire screen cylinders having end rings made of steel is the joining of a somewhat flexible wedge wire mat to a rigid end ring. Since the wedge wire mat is currently welded to the end rings, the heat of welding changes the steel properties whereby the part of the wedge wires subjected to the heaviest load is the weakest to withstand the applied stresses. The wedge wires made of steel, when subjected to dynamic loading, typically break down through crack growth. The internal stresses and the changes in the physical properties in the so-called heat-affecting zone (HAZ) caused by welding render the elements made of steel liable to crack growth.

DE-A1-10 2004 047949 discusses a fractionation or screening device with a fractionation or screening structure and a bearing or support for mounting the fractionation or screening structure on a rigid machine base. The bearing or support has greater compliance than the fractionation or screening structure itself.

The above problems, among others, have been attempted to be solved with the screen cylinder of FI-A1-20041567 discussing a preferably layered, composite end ring. However, the manufacture of such a layered end or connecting ring is very expensive and complicated, as it requires several different materials that have different requirements. Also the manufacture of the end ring is very time consuming and labour demanding as each layer has to be given some time to solidify prior to applying the next layer. However, the layered end ring, even if it may have both of its radially extending faces covered with metal, has the same problem as that made of a single composite. In other words, the solidified composite material cannot normally be subjected to such mechanical loads that are involved in fastening the screen cylinder by means of its end ring to the support flange on the screen apparatus. In other words, if the composite material is supposed to be provided with holes used for attaching the screen cylinder by means of bolts to a support flange, the loads subjected to the end ring via the fastening bolts easily start cracking the solidified composite material resulting in weakening of the attachment and the end ring structure and the creation of minor composite particulates that probably enter the pulp to be screened though there is a small possibility that the particulates may enter the accepts, too. And, the composite end ring proves to be even more problematic in case the end ring should be provided with threaded holes for eyebolts that are used in the installation and removal of the screen cylinder. The threaded holes probably are able to carry the load in the installation phase of the screen cylinder, but in the removal stage the screen cylinder may be for one or another reason stuck in its place whereby a substantial force is needed for its removal. Thereby there is a clear risk that the fastening of one or more of the eyebolts break, and the removal of the screen cylinder gets extremely complicated.

An object of the present invention is to offer a solution to at least some of the above-discussed problems. The solution is to use in the manufacture of at least one of the connecting rings or end rings a combination of a massive ring, preferably of metal, and a plastic material fastening the screen wires to the ring. This kind of a fastening is reliable and still allows some relative internal motion between the screen cylinder components whereby the loads subjected to the screen element may be easily controlled.

Another object of the present invention is to solve the problem concerning the attachment of the ends of the screen wires to the end ring in a reliable manner while still ensuring some flexibility.

A further object of the present invention is to ensure that the installation and removal of the screen cylinder from the screen housing may be performed without any unnecessary risks.

At least some of the objects of the present invention are met with the method of manufacturing a screen cylinder, said method comprising the steps of manufacturing a round screen element of one of screen wires fastened to support elements and a sheet metal member fastened to support elements; said screen element having a screening surface, an opposite surface including the support elements, and screening openings in the form of one of screening slots left between adjacent screen wires, and milled or drilled perforations in the sheet metal member; said round screen element having two axial ends, manufacturing a massive circular ring (for fastening to an end of said round screen element, said massive circular ring having a radial end surface, fastening said round screen element to said massive circular ring, said end surface of said massive circular ring forming at least partially an end surface of the screen cylinder, wherein said fastening is performed by placing said massive circular ring on a working surface such that said end surface of said massive circular ring lies against the working surface, positioning said round screen element coaxially with said massive circular ring above said working surface, placing a barrier against the screening surface such that the barrier extends from said working surface at least up to the level of the lowermost support element, applying non-composite polymeric material in a generally circular cavity formed by at least the barrier, and the massive circular ring such that at least the lowermost support element is arranged into contact with said non-composite polymeric material, and allowing the non-composite polymeric material to harden, whereby the massive circular ring is attached to the round screen element and to its lowermost support element by means of the hardened non-composite polymeric material.

In a similar manner at least some of the objects of the present invention are met with a screen cylinder comprising a round screen element and two end rings; the round screen element being formed at least one of a number of screen wires attached to support elements, and a sheet metal member attached to support elements; the round screen element having a screening surface, an opposite surface including the support elements, and screening openings extending through said screen element in the form of one of screening slots left between adjacent screen wires, and milled or drilled perforations in the sheet metal member; the end rings being fastened to said screen element at an axial end area thereof, wherein at least one of said end rings is formed by fastening a massive circular ring said end area of said screen element and to at least one support element by means of a non-composite polymeric material cast between the circular ring, the screen element and the at least one support element.

Other characteristic features of the method and the screen cylinder of the present invention will become apparent from the appended dependent claims.

The present invention, when solving at least some of the above-mentioned problems, also brings about a number of advantages, of which a few are listed as follows:
- No welding of the screen wires. No changes in the internal metal structure.
- Spreading the stresses caused by the attachment of the screen wires to the connecting ring on a wide area i.e. to the length of the screen wire embedded in the end ring
- More reliable connecting ring attachment
- Easy to modify for different applications, different sorters etc.
- Installation without a clearance with the sorter
- Controlling vibrational properties of the screen
- Reduced weight compared to steel
- Holes used for fastening the screen cylinder to the screen housing arranged in the massive metal ring
- Threaded holes for the eyebolts used in installing or removing the screen cylinder arranged in the massive metal ring

However, it should be understood that the listed advantages are only optional, whereby one or more of the advantages may be obtained depending on the way the invention is put into practice..

In the following, the present invention is explained in more detail in reference to the accompanying drawings, of which
Figure 1 illustrates a partially cut side view of a prior art wedge wire screen cylinder,
Figure 2 illustrates a partial cross-section of a screen cylinder in accordance with a first preferred embodiment of the present invention,
Figure 3 illustrates a partial, somewhat more detailed, cross-section of the first preferred embodiment of the present invention,
Figure 4 illustrates a partial cross-section of a screen cylinder in accordance with a second preferred embodiment of the present invention,
Figure 5 illustrates a partial cross-section of a screen cylinder in accordance with a third preferred embodiment of the present invention,
Figure 6 illustrates a partial cross-section of a screen cylinder in accordance with a fourth preferred embodiment of the present invention, and
Figure 7 illustrates a partial cross-section of a screen cylinder in accordance with a fifth preferred embodiment of the present invention.

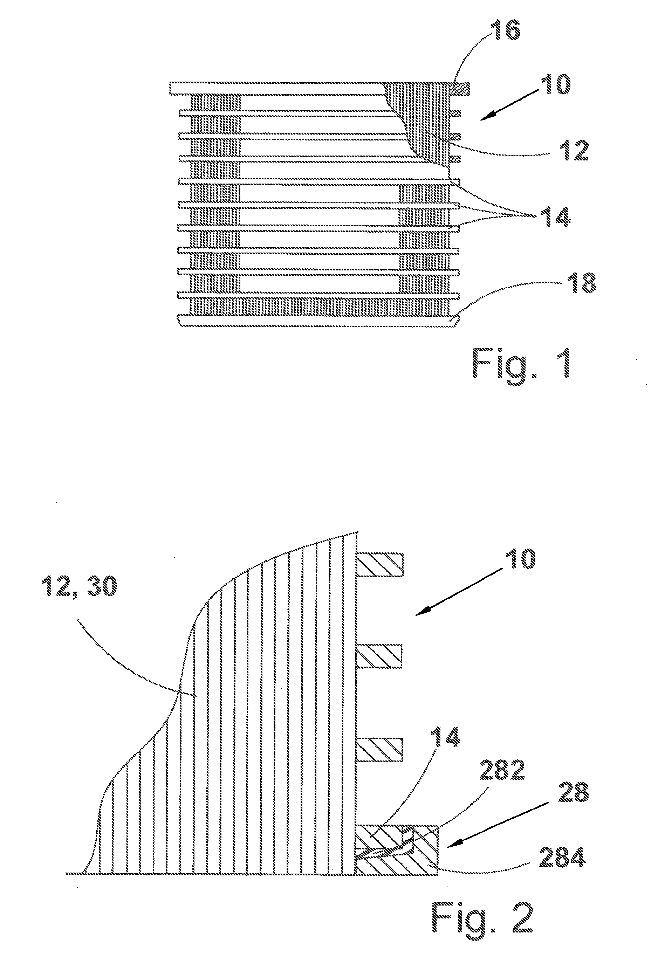

In Figure 1 there has been shown a prior art screen cylinder 10, which is made of screen wires 12, so-called wedge wires attached to support elements 14 and end rings 16 and 18. The structure and the method of manufacture of such a wedge wire screen cylinder has been discussed in dozens of patent documents, like for example US-A-6,426,003, US-A-6,521,096, US-A-6,785,964 and US-A-6,789,681, during the last two or three decades whereby there is no reason to explain the prior art manufacture in more detail here.

The prior art screen cylinder 10 of Figure 1 comprises normally axially oriented screen wires 12, which have been fastened to circumferentially running support elements i.e. so called support rings 14. The support rings may have a generally rectangular cross-section like the rings in the first two of the above mentioned patents or a U-shaped cross-section like the rings in the last two of the above mentioned documents. Some other cross-sectional shapes have also been suggested. Nowadays the wires 12 have often been fastened to notches machined in the support elements 14 transverse to the longitudinal or circumferential direction thereof. In some cases the support elements 14 have been further supported by a reinforcing ring positioned on the outside (in so called outflow screen cylinders) rim of the support element. Another reinforcing structure used sometimes is a so called reinforcing shell that is made of about 10 - 15 mm thick steel plate. The plate is first provided with large openings, and then rolled into cylindrical form and welded to form a reinforcing cylinder. The reinforcing shell is finally shrink-fitted on the support rings. Such a reinforcing shell or backing cylinder has been discussed in more detail in US-A-5,200,072, which among other things teaches that the shell may be used in connection with both milled sheet metal and wedge wire screen cylinders.

The screen cylinder 10 further comprises end or connecting rings 16 and 18 at both axial ends of the cylinder 10. The screen cylinder 10 is aligned, fastened and supported by means of the end or connecting rings 16, 18 to support flanges attached to the housing of the screening apparatus. An option is to attach the upper end of a screen cylinder by means of its end ring 16 to an upper support flange by means of bolts, and support i.e. push the lower end ring of the lower end of a screen cylinder against a conical surface in the lower support flange. The conical surfaces of the lower support flange and the lower end ring cooperate for sealing the lower end of the screen cylinder i.e. for preventing the screening accepts from leaking to the rejects or vice versa and ensure that the screen cylinder is coaxial with the rotor axis.

There are several options for fastening the end rings to the wedge wires. Sometimes the end rings have been shrink-fitted on the support rings closest to the ends of the screen wires, and, optionally, thereafter welded to the support ring and/or the screen wires. Some prior art screen cylinders have also been provided with a circumferential groove into which the ends of the screen wires have been installed prior to welding. Sometimes the ends of the screen wires have just been welded on and against the inner surface of the end ring. As an alternative to the screen cylinder shown in Figure 1 it should be remembered that a screen cylinder may have more than two connecting rings i.e. not only just the two end rings but, especially in connection with lengthy screen cylinders, additional connecting rings provided between the ends of the screen cylinder to support the screen cylinder at its mid-portion by a support flange on the screen housing, too. In such a case the screen cylinder may be made of several cylinder sections fastened by means of the connecting rings to each other.

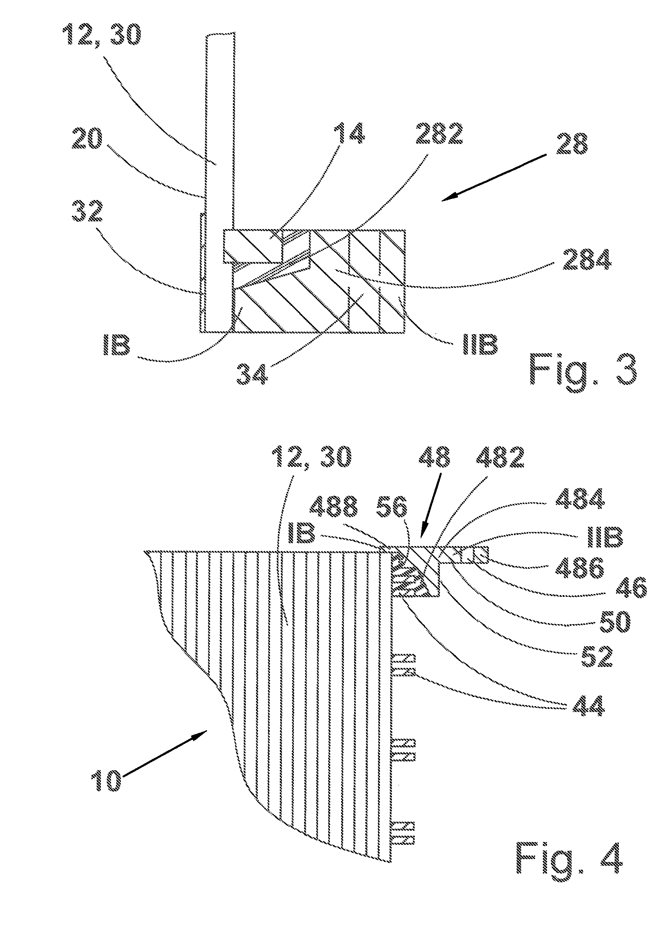

Fig. 2 illustrates a partial cross-sectional view of an end part of an outflow screen cylinder 10 in accordance with a preferred embodiment of the present invention. In other words, it is a question of a screen cylinder where the accepts flow from inside the screen cylinder to the outside thereof, and where the support rings and end or connecting rings are arranged radially outside the screen wires 12. Figure 3 illustrates the same in more detail. However, Figure 3 could as well be understood to show the detailed structure of an inflow screen cylinder, too. Thus, the end ring 28 is arranged in connection with the ends of the screen wires 12 of a screen cylinder 10, i.e. the end ring is attached to the end areas of the screen wires 12. The end ring 28 of the screen cylinder 10 is, in this embodiment of the present invention, formed of a support ring or support element 14 fastened to the screen wires 12 at a distance (at least 5 mm, preferably more) from the ends of the screen wires, of a molded portion 282, and of a massive circular ring 284, preferably of steel, acting as a mold ring. The phrase "massive ring" indicates here that it is not a question of a thin sheet metal member acting as a mere mold, but of a thicker ring-shaped member that is in itself capable of receiving and carrying the stresses originating from the fastening of the screen cylinder to the housing of a screen apparatus, as well as the various stresses subjected to the screen cylinder in use. Thereby the thickness or axial dimension of the massive circular ring preferably corresponds to that of the end ring to be manufactured. The circular ring 284 has two coaxial boundary areas, a first boundary area (IB) situated at a close proximity to the ends of the screen wires 12, and a second boundary area (IIB) in a radial direction farther away from the ends of the screen wires 12. Thus the second boundary area (IIB) may be either outside or inside the perimeter formed by the screen element 30. The main task of the molded portion 282 is to fasten the massive ring 284 to both the screen wires 12 and the support ring 14. Another task the molded portion 282 may have, depending on the material used, is to form a dampening layer between the screen wires 12 and the massive ring 284. The shape and size of the ring 284 is, on the one hand, such that it together with the screen wires 12 and the support ring 14 forms an applicable substantially annular cavity for the molded portion 282, and on the other hand, such that the screen cylinder 10 may be supported and/or fastened centrally within the screening apparatus. In other words, the dimensions of the second boundary area (IIB) of the massive circular ring 284 have to match the mating dimensions of the fastening, supporting and/or aligning elements of the screening apparatus. Also, the massive circular ring 284 may have openings or threaded holes as shown by reference numeral 34 for pins or bolts used for aligning and/or fastening the screen cylinder 10 to, for instance, the support flange supported by the housing of the screening apparatus. The circular ring 284 may also be provided with threaded holes, which are in use only when installing or removing the screen cylinder from the screen housing. In other words, eye bolts or other lifting means are fastened to said threaded holes.

At this stage it has to be understood that normally, but not necessarily always, the end ring having openings for fastening bolts is used at the end of the screen cylinder closer to the openable cover of the screening apparatus i.e. the upper end of a screen cylinder in a vertical screening apparatus. Thus, in a sense, Figures 2 and 3 show the screen cylinder 10 upside down. However, this has been done on purpose to ease in understanding the manufacture of the end ring. Referring to Figure 3 the manufacture of the screen cylinder 10 i.e. fastening of the end ring 28 takes place as follows. When it is a question of an outflow screen cylinder the round screen element 30 or screen mat formed either of screen wires or wedge wires 12 fastened to straight support bars 14 that have been thereafter rounded into support rings 14, or of screen wires directly fastened to round support rings 14 is positioned standing on a working surface, which is preferably a substantially horizontal planar surface, within the massive ring 284 coaxial with the ring 284. A barrier 32, for instance a metal or plastic foil or strip, is positioned and pressed against the screen wires 12 inside the screen element 30 such that the barrier 32 extends from the planar surface at least up to the level of the lowermost support ring 14. Thereafter non-composite polymeric plastic material 282 is applied, preferably poured in the annular cavity formed between the massive ring 284 and the barrier 32. When it is a question of the manufacture of the end ring 28 of an inflow screen cylinder 10 the round screen element 30 or screen mat formed either of screen wires or wedge wires 12 fastened to straight support bars 14 that have been thereafter rounded into support rings 14, or of screen wires directly fastened to round support rings 14 is positioned standing on a working surface outside the massive ring 284 coaxial with the ring 284. A barrier 32, for instance a metal or plastic foil or strip, is positioned and pressed against the screen wires 12 outside the screen element 30 such that the barrier 32 extends from the planar surface at least up to the level of the lowermost support ring 14. Thereafter non-composite polymeric plastic material 282 is applied, preferably poured in the annular cavity formed between the massive ring 284 and the barrier 32. In both cases, the non-composite polymeric material 282 flows through the screening slots against the barrier 32, both adhering to the screen wires and forming a form-lock with the wires. After the plastic material 282 has hardened the thus formed screen element 30 - end ring 28 combination is lifted off the planar surface. The manufacture of the opposite end or connecting ring may take place in a similar fashion.

Figure 4 illustrates a second preferred embodiment of the end ring 48 of the present invention. Here the end ring 48, and the screen cylinder 10, has been shown in their most ordinary application position i.e. the screen cylinder 10 arranged in vertical position, and the upper end ring 48 having a certain shape. Also, Figure 4 shows the cross-section of a second popular shape of the support ring 44. In other words, Figures 2 and 3 show a support ring 14 having a rectangular cross-section, whereas Figure 4 shows a support ring 44 having a U-shaped cross-section, similar to that discussed in US-A-6,785,964 and US-A-6,789,681. However, in relation to the invention the shape of the support rings 44 plays an insignificant role. The only difference there may be found between the different support rings is that the U-shaped support ring 44 offers, if used in the manner shown in Figure 4, more contact surface for the non-composite polymeric material to adhere than a rectangular one 14 of Figures 2 and 3.

In accordance with the embodiment of Figure 4 the end or connecting ring 48 is formed of the same components as the end ring of Figures 2 and 3, i.e. of a support ring 44 arranged at a distance (at least 5 mm, preferably more) from the ends of the screen wires, a molded portion 482, and a massive circular ring 484. In this embodiment the massive ring 484 is shaped to match the fastening element of the screening apparatus i.e. for instance the support flange arranged on the inner wall of the screen housing. For that purpose the second boundary area (IIB) of the ring 484 has a flange portion 486 that is intended to sit on the fastening element or the support flange such that the lower surface 50 of the flange portion 486 is against the upper surface of the fastening element or the support flange. In a corresponding manner the cylindrical surface 52 of the second boundary area (IIB) of the massive circular ring 484 is intended to match to the corresponding surface of the fastening element or the support flange such that only a marginal clearance needed in the installation of the screen cylinder 10 is left therebetween. Further the flange portion 486 of the second boundary area (IIB) of the massive circular ring 484 is provided with a number of openings 46 for bolts or pins used for fastening and/or aligning the screen cylinder 10 coaxial with the screen axis. Also threaded holes for the installation and removal may be provided in the massive circular ring 484.

As an additional and also independently useable embodiment of the present invention the massive ring 484 has at its first boundary area (IB) another, axially outside the axial ends of the screen wires 10 extending flange portion 488. This is, thus, an optional structure to the one illustrated in Figures 2 and 3 where the massive ring did not extend outside the axial ends of the screen wires but remained in radial direction either inside or outside the screen element 30, depending whether it was a question of an inflow or an outflow screen cylinder. Here, the other flange portion 488 extends in radial direction preferably at most up to the screening surface 20 i.e. the surface of the screen cylinder 10 or screen element 30 opposite to the support rings 44, in other words, up to the surface of the screen cylinder 10 facing the rotor.

The dimensions or the surface/surfaces of the massive circular ring 484 facing the screen element 30 may be formed rather freely. Figure 4 shows, as an example only, grooves 56 in the surface of the ring 484 facing the screen element. In place of grooves, ridges, dents, pins or any kind of irregular shapes could be used. The purpose of such deformations is merely to increase the contact area between the non-composite polymeric material 482 and the circular ring 484 increasing the strength of the fastening between the non-composite polymeric material and the circular ring 484. The only prerequisite for the shape of the above discussed surface of the circular ring 484 is that there has to be left an appropriate cavity between the ring 484 and the screen wires 12, and the support ring 44 for the non-composite polymeric material to flow and fill the cavity such that substantially no gas is left during the manufacturing stage in the molded part 482. Thus, the molded part 482 may either act as mere glue whereby the volume of the cavity need not be large (radial dimension of the cavity preferably two mm or more), or in addition to acting as glue also as a dampening layer whereby a larger volume (i.e. radial dimension) has to be considered. Though it has been shown in Figure 4 that the support ring 44 is for the most part embedded in the end ring 48, it has to be understood that the support ring 44 may, for instance, be located farther away from the axial end of the screen cylinder 10 whereby the surface of non-composite polymeric material of the molded portion 482 may not even extend into the inner cavity between the legs of the U-shaped support ring 44, but remains only in connection with the surface of the support ring 44 closest to the end of the screen cylinder. Thus it should be understood that the strength of the fastening between the molded portion 482 and the screen wires 12 is considered sufficient for fastening the end ring 48 to the end of the screen cylinder. However, the present invention precludes, neither in this nor in any other embodiment, the use of more than one support ring in connection with or embedded in the molded portion.

As to the manufacture of the end ring for the screen cylinder shown in Figure 4, it is obvious that the massive ring 484 has been manufactured separately. In other words, it is first either molded and/or machined, whereafter it is placed on a working surface, preferably a planar horizontal surface, such that its radial surface shown as the upper surface in Figure 4 is positioned against the planar surface. Thereafter the screen element 30 is placed standing on the flange portion 488 coaxial with the massive circular ring 484, and a barrier like the one shown in Figure 3 is pressed on the screening surface against the screen wires 12 such that the barrier extends from either the planar surface or the flange portion 488 at least up to the level of the lowermost support ring 44. Then, the non-composite polymeric material may be applied, preferably poured into the cavity between the massive circular ring 484 and the screen element 30, whereby the material penetrates in each screening opening or slot between adjacent screen wires ensuring a strong connection between the material 482 and the screen wires 12.

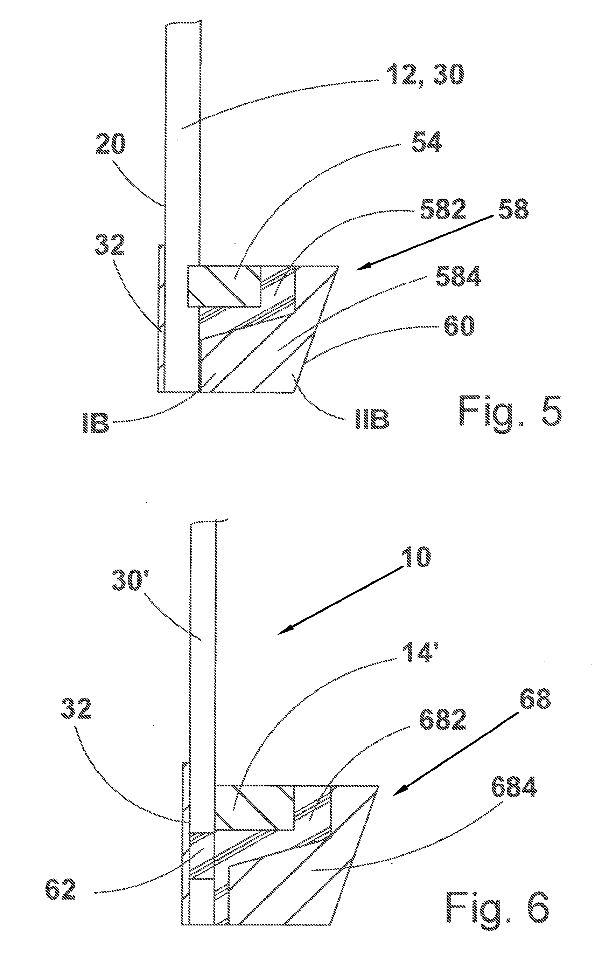

As shown in Figures 2 - 4 the massive circular ring 284, 484, includes the second boundary area (IIB) of the end ring 28, 48, as well as the axially outer surface of the end or connecting ring 28 or 48. Thus it should be understood that the manufacturing method of the screen cylinder discussed in the present invention allows all possible shapes of the end ring. In other words, as shown in Figure 5, it is possible to arrange the massive circular ring 584 to have a downwardly (towards an end of the screen cylinder) tapering outer surface 60, for example, whereby the end ring 58 is preferably used as the lower end ring of a screen cylinder. In other respects the end ring 58 of Figure 5 corresponds to those of Figures 2 and 3.

In accordance with a further preferred embodiment of the present invention the massive ring is provided with anchor means, for instance additional sheet metal pieces or metal bars extending into the cavity between the circular ring and the screen element to increase the surface area for the non-composite polymeric material to adhere. Further, as already discussed earlier the circular ring may be provided with holes for bolts used for fastening the screen cylinder to the fastening means, like for instance to the support flange. However, if the holes of the circular ring open into a cavity that is supposed to be molded with the non-composite polymeric material, the holes should be provided, before molding, with cores extending into and through the cavity the non-composite polymeric material is poured in. After the non-composite polymeric material has hardened the cores are removed whereby the end or connecting ring has holes/openings for fastening bolts. Naturally another option is to drill corresponding holes through both the massive circular ring and the non-composite polymeric material after the non-composite polymeric material has solidified. However, when arranging the holes to extend in the non-composite material it is important to ensure that the thickness of the massive circular ring, preferably of steel, at the hole is sufficient for carrying all the loads subjected to the attachment of the screen cylinder i.e. so that substantially no load is subjected to the non-composite material. A possible way of protecting the non-composite material from even compressive loads is to arrange a sleeve-like metal insert to extend through the non-composite material as an extension of the hole in the massive ring so that when the hole is used for fastening the screen cylinder to the support flange the compressive forces created by the fastening bolts is carried by the insert and the massive ring together.

It has to be noted that, in the above specification, it has been taken for granted that the screen wires extend either all the way from the end surface of the screen cylinders up to the opposite end surface thereof or, in accordance with Figure 4, at least up to the other flange portion 488 of the circular ring 484. However, it is also possible that, in the molding stage, the screen wires terminate at a distance from either the planar mold surface (in the embodiment of Figures 2 and 3, the working surface on which the massive ring is positioned before molding) or the other flange portion 488 in Figure 4 whereby the axial end surface or surfaces of the screen wires are fully covered by either the non-composite polymeric end ring material alone or the non-composite polymeric end ring material together with the other flange portion 488 of the circular ring. In other words, it is possible that the screen element is before molding arranged to stand at a small distance either above the planar surface, or above the flange portion of the circular ring. In these cases, the diameter of the first boundary area of the circular ring is, preferably, substantially equal to the inner diameter of the cylindrical screen element if it is a question of an outflow screen cylinder. Naturally the dimensioning is opposite if it is a question of an inflow screen cylinder.

Figure 6 illustrates yet another embodiment of the present invention. Figure 6 shows a screen cylinder 10 basically similar to the one shown in Figure 5. However, in accordance with the present invention the screen element 30' is formed at least at the end part of the screen cylinder 10 of a sheet metal cylinder, which is either totally non-perforated, or provided with milled holes or slots for screening or other purposes, and a support ring 14', which is normally fastened by welding to the sheet metal cylinder, though also gluing, soldering or shrink fitting may be used. In other words, the sheet metal end part of the cylinder shown in Figure 6 may be an end part of a milled sheet metal screen cylinder, an end part of a wedge wire screen cylinder, the end part being made, for some reason, of sheet metal, or a sheet metal part of a separate device attached to the end of a screen cylinder, like for instance a wall of an annular reject channel arranged at an end of a screen cylinder. The end ring 68 of the present invention may be used in connection with this kind of screen cylinder 10, too. In accordance with performed tests the non-composite polymeric material 682 used for attaching the circular ring 684 to the screen cylinder adheres very efficiently to smooth steel surfaces, too, whereby it is not totally necessary to provide the end part of the cylinder with any holes or slots in its surface for increasing the strength of the attachment. However, it is also possible to provide the screen element 30' with holes 62 larger than ordinary screening openings, whereby the holes 62, and the hardened non-composite polymer material therein, assist in carrying any circumferential or axial loads subjected to the screen cylinder 10. In addition to holes 62 through the screen element the surface of the screen element may also be provided with axial, circumferential or inclined grooves or ridges or surface irregularities of any kind for improving the adherence of the non-composite polymeric material and its load carrying capacity.

This far the above specification has only discussed the end rings combined with mere support elements 14, 14', 44 and 54. However, already when discussing prior art screen cylinders in connection with Figure 1, it was mentioned that sometimes specific reinforcing elements have been used in connection with both milled sheet metal and wedge wire screen cylinders. The reinforcing elements have either been in the form of metal rings that have, most often, been shrink-fitted on the outside rim of the support elements i.e. the support rings, or reinforcing shells that have been, again most often, shrink-fitted on the outside rims of the support elements. The support shells usually run axially over the entire length of the screen cylinder i.e. reinforcing all the support elements.

The presence of a reinforcing ring on the support element closest to an end of a screen cylinder does not change the construction of the end ring of the present invention. In other words, both the support element and the reinforcing ring thereon may be at least partially embedded in the end ring, like shown with mere support elements in Figures 2 - 6, and like discussed above. However, the use of a reinforcing shell offers several alternatives.

Firstly, it is possible that the reinforcing shell does not extend to the entire length of the screen cylinder, not at least at the end of the cylinder applying the present invention. It is, for instance, possible that the reinforcing shell is arranged to support the second support element counted from the end of the screen cylinder whereby the first support element is embedded in the end ring and receives the required additional reinforcement from the end ring. Naturally if both the first and second support elements are part of the end ring, the reinforcing shell is arranged to reinforce the support elements from the third support element onwards.

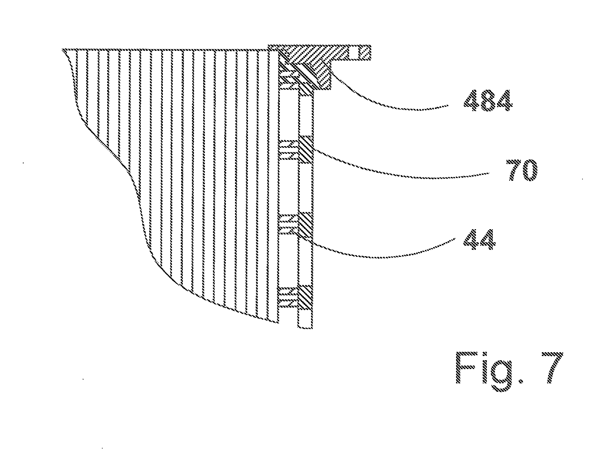

Secondly, it is also possible that the reinforcing shell is arranged to extend closer to the end of the screen cylinder whereby the end of the reinforcing shell is either embedded in the end ring material or at least has a common interface therewith. In such a case the plastic end ring material is used to fasten the reinforcing shell to the support element or ring it, at least partially, embraces. In fact, as shown in Figure 7, a further interesting alternative is to use the reinforcing shell 70 in connection with U-shaped support elements 44. In such a case the axial end of the reinforcing shell is arranged to rest on the leg of the first support element 44 farther away from the end of the screen cylinder, whereby the end ring material when applied, preferably poured, in the cavity between the massive circular ring 484 and the wedge wires will also fill the cavity between the legs of the support element and fasten the reinforcing shell 70 to both the support element 44 and the massive circular ring 484.

Yet another option is to extend the reinforcing shell even closer to the axial end of the screen cylinder. In such a case the end part of the shell is provided with openings, either similar to the rest of the shell or specifically designed ones, via which the outside of the reinforcing shell is in flow communication with the cavity between the shell and the screen wires. Now when manufacturing the end ring the massive circular ring is arranged on a working surface, the screen mat together with reinforcing shell is positioned centrally within the circular ring, the barrier is placed against the screening surface and the non-composite polymeric end ring material is applied, preferably poured, in the cavity within the circular ring. The openings in the reinforcing shell allow the non-composite polymeric material to fill the space between the barrier and the massive circular rings, just like in any other embodiment discussed earlier in the specification. Also, it should be understood that all the positioning options discussed in connection with the end of the screen cylinder or wedge wires apply to the positioning of the end rim of the reinforcing shell. In other words, the rim may extend to the axial end surface of the end ring of the screen cylinder or be positioned at a distance thereof.

As to the material aspects of the invention the screen wires, its support rings as well as the milled screen cylinder are made of steel. However, the rest of the components of the screen cylinder of the present invention i.e. the massive circular ring and the non-composite polymeric material have several options. Nowadays, the circular ring is most often made of metal, preferably steel, but it is also a worthwhile option that may get more and more popular in the future to manufacture the circular rings of plastics and/or composite materials. It is, for instance, possible to cut the circular ring from a plastic sheet having a suitable thickness, or to mold such a ring separately.

The operating environment of a screen cylinder at a pulp or paper mill sets a number of requirements for the end ring material. The loads may be divided in three categories. Chemical loading, thermal loading and mechanical loading.

The chemical loading is based on the use of very different i.e. both alkaline and acidic chemicals in the pulp and paper production. Most typical chemicals are hydrogen peroxide, sodium hydroxide, sulphuric acid, sodium dithionite, sodium sulfide, sodium borohydride, lignin residues, hemicelluloses and inorganic chemicals.

Thermal loading is based, on the one hand, on the storage or transportation phase of a screen cylinder when the temperature may be well below 0 degrees centigrade, sometimes easily down to -35 degrees. On the other hand, the temperature in the operating conditions at a pulp mill range normally between +50 and +80 degrees, but sometimes may rise up to about +125 degrees centigrade. Though such temperatures do not form any challenge to metal materials, they set quite hard prerequisites for non-metallic materials.

Mechanical loading is, in a way, the easiest to handle, as the load levels do not grow very high. There are tensile stresses, sometimes compressive stresses, as well as torsion, and vibration, but the stress levels in each case are rather easily manageable by non-metallic materials, too.

Thus, in brief, the non-metallic i.e. non-composite polymeric material used for fastening the massive annular ring to the screen element must
- have good chemical resistance
- sustain large temperature variation
- have good wear resistance
- sustain good mechanical properties under above mentioned conditions
- have flexible and resilient properties (dampening properties)
- have good fatigue enduring properties
- have good adhesion to stainless steel (either chemical or mechanical)
- be castable

Some thermoset plastics and castable polyurethanes are materials that are preferably applied for the above described purpose, and have the required properties. Thermosetting polymers are materials that are usually liquid prior to curing and designed to be molded into their final form. Curing process transforms the resin into a plastic by a cross-linking process. The thermoset material cannot be melted or reshaped after it is cured.

Thermoset plastics, such as polyesters, vinyl esters, and epoxies, are typically used as matrix materials of reinforced plastics and as unreinforced they are rather hard and brittle. Vinyl esters have the best chemical resistance, but their mechanical properties are not as good as those of epoxies. Chemical resistance of epoxies is good and their mechanical properties are excellent. Epoxies are also available as toughened grades. The performed tests have shown that by using appropriate additives (including both liquid and particulate components) the material properties of polyesters, vinyl esters and epoxies may be improved to match those required by the present invention.

However, certain polyurethanes that are also based on thermoset materials have proven to be very attractive alternatives for the above discussed thermoset plastics. For instance polyurethane cast elastomers are suitable materials for the end ring application of the present invention. They have good wear resistance and are widely used in various wear-related applications. Good adhesion to metals can be achieved, and their chemical resistance is good. Just like with thermoset plastics, also the properties of polyurethane cast elastomers may be improved by using appropriate additives (including both liquid and particulate components).

In addition to thermoset materials, also thermoplastic materials, like for instance PTFE, have been considered for the above described purpose. In view of the mere material requirements there are a number of thermoplastics that meet the demands of the operational environment. However, there are practical factors that complicate the use of thermoplastics. For instance, the thermoplastics are not normally castable by low pressure process but are applied by for instance extrusion, which requires special tooling and therefore substantial investments. Additionally, since the price of thermoplastics is comparable to that of thermoset materials, no significant savings (countering the additional investments) can be gained by the use of thermoplastics.

It should be understood that the above is only an exemplary description of a novel and inventive method of manufacturing a screen cylinder and a screen cylinder. The above should not be understood as limiting the invention by any means but the entire scope of the invention is defined by the appended claims only. From the above description it should be understood that separate features of the inventive screen cylinder or end or connecting ring may be used in connection with other separate features even if such a combination has not been specifically shown in the description or in the drawings. In other words, for instance various features discussed in connection with wedge wire screen elements or screen cylinders may be applied in connection with milled or drilled sheet metal members or screen cylinders, too. It should also be understood that the above specification when talking about a screen cylinder means a unit comprising the screening element having the screen wires or a perforated (provided with milled holes or slots) sheet metal member or cylinder attached to support rings and end rings at both axial ends thereof. Thus, the above definition covers also cylindrical screen sections of such screen baskets that are made of several cylindrical sections attached one on top of the other. Thus the end rings of screen cylinders may be used as the intermediate connecting rings of such a multi-section screen basket.

## Claims

1. A method of manufacturing a screen cylinder, said method comprising the steps of
- manufacturing a round screen element (30, 30') of one of screen wires (12) fastened to support elements (14, 44) and a sheet metal member fastened to support elements (14');
o said screen element (30, 30') having a screening surface (20), an opposite surface including the support elements (14, 14', 44, 54), and screening openings in the form of one of screening slots left between adjacent screen wires (12), and milled or drilled perforations in the sheet metal member;
o said round screen element (30, 30') having two axial ends,
- manufacturing a massive circular ring (284, 484, 584, 684) for fastening to an end of said round screen element (30, 30'), said massive circular ring (284, 484, 584, 684) having a radial end surface,
- fastening said round screen element (30, 30') to said massive circular ring (284, 484, 584, 684), said end surface of said massive circular ring (284, 484, 584, 684) forming at least partially an end surface of the screen cylinder (10),
**characterized in that** said fastening is performed by
- placing said massive circular ring (284, 484, 584, 684) on a working surface such that said end surface of said massive circular ring (284, 484, 584, 684) lies against the working surface,
- positioning said round screen element (30, 30') coaxially with said massive circular ring (284, 484, 584, 684) above said working surface,
- placing a barrier (32) against the screening surface (20) such that the barrier (32) extends from said working surface at least up to the level of the lowermost support element (14, 14', 44, 54),
- applying non-composite polymeric material (282, 482, 582, 682) in a generally circular cavity formed by at least the barrier (32), and the massive circular ring (284, 484, 584, 684) such that at least the lowermost support element (14, 14', 44, 54) is arranged into contact with said non-composite polymeric material (282, 482, 582, 682) and
- allowing the non-composite polymeric material (282, 482, 582, 682) to harden,
- whereby the massive circular ring (284, 484, 584, 684) is attached to the round screen element (30, 30') and to its lowermost support element (14, 14', 44, 54) by means of the hardened non-composite polymeric material (282, 482, 582, 682).

2. The method as recited in claim 1, **characterized by** embedding at least the lowermost support element (14, 14', 44, 54) at least partially in said non-composite polymeric material (282, 482, 582, 682).

3. The method as recited in any one of the preceding claims, **characterized by** positioning said round screen element (30, 30') coaxially with said massive circular ring (284, 484, 584, 684) above said working surface to arrange a layer of non-composite polymeric material outside the axial end of the screen element (30, 30').

4. The method as recited in any one of the preceding claims, **characterized by** positioning said round screen element (30, 30') coaxially with said massive circular ring (484) to stand on a radially extending flange portion (488) of the massive circular ring (484).

5. The method as recited in any one of the preceding claims 1 - 3, **characterized by** positioning said round screen element (30, 30') coaxially with said massive circular ring (484) at a distance above a radially extending flange portion (488) of the massive circular ring (484) to arrange a layer of non-composite polymeric material between the end of the screen element (30, 30') and the radially extending flange portion (488) of the massive circular ring (484).

6. The method as recited in any one of the preceding claims, **characterized by** using one of a polyester, a vinyl ester, an epoxy, a polyurethane and a polyurethane cast elastomer as said non-composite polymeric material.

7. The method as recited in any one of the preceding claims, **characterized by** arranging one of a reinforcing ring and a reinforcing shell (70) on at least one of the support elements (14, 14', 44, 54).

8. The method as recited in claim 7, **characterized by** arranging one of a reinforcing ring and a reinforcing shell (70) at least partially embedded in the non-composite polymeric material.

9. The method as recited in any one of the preceding claims, **characterized by** providing at least one surface (50, 52, 60) of the massive circular ring (284, 484, 584, 684) with dimensions to match to a support flange arranged on a housing of a screening apparatus for aligning and supporting said screen cylinder (10) to said support flange.

10. The method as recited in any one of the preceding claims, **characterized by** providing the massive circular ring (284, 484, 584, 684) with at least one of holes (34, 46) for fastening the screen cylinder to the screen housing and threaded holes for fastening the eyebolts for the installation or removal of the screen cylinder.

11. A screen cylinder comprising
• a round screen element (30, 30') and two end rings;
• the round screen element (30, 30') being formed at least one of a number of screen wires (12) attached to support elements (14, 44, 54), and a sheet metal member (30') attached to support elements (14');
• the round screen element (30, 30') having a screening surface (20), an opposite surface including the support elements (14, 14', 44, 54), and screening openings extending through said screen element in the form of one of screening slots left between adjacent screen wires (12), and milled or drilled perforations in the sheet metal member;
• the end rings being fastened to said screen element (30, 30') at axial end
areas thereof,
**characterized in that**
• at least one of said end rings (28, 48, 58, 68) is formed by fastening a massive circular ring (284, 484, 584, 684) to said end area of said screen element (30, 30') and to at least one support element (14, 14', 44, 54) by means of a non-composite polymeric material (282, 482, 582, 682) cast between the massive circular ring, the screen element and the at least one support element.

12. The screen cylinder as recited in claim 11, **characterized in that** the screen element (30, 30') has holes, slots or openings at the end area filled by the non-composite polymeric material (282, 482, 582, 682) extending up to the screening surface (20).

13. The screen cylinder as recited in claim 11 or 12, **characterized in that** said massive circular ring (284, 484, 584, 684) has an axial dimension, said axial dimension corresponding mainly to that of the end ring (28, 48, 58, 68).

14. The screen cylinder as recited in any one of the preceding claims 11 - 13, **characterized in that** said massive circular ring (284, 484, 584, 684) has two coaxial boundary areas, a first boundary area (IB) being at a close proximity of said screen element (30) and a second boundary area (IIB) farther away therefrom.

15. The screen cylinder as recited in claim 14, **characterized in that** said second boundary area (IIB) of said massive circular ring (284, 484, 584, 684) is provided with means for aligning the screen cylinder (10) centrally within the screening apparatus.

16. The screen cylinder as recited in claim 14, **characterized in that** said second boundary (IIB) area is provided with surfaces (50, 52, 60) dimensioned to match to the dimensions of the fastening or supporting elements provided in the screening apparatus.

17. The screen cylinder as recited in any of the preceding claims 11 - 16, **characterized in that** said end ring (28, 48, 58, 68) extends in radial direction from said screening surface (20) to a surface of said massive circular ring (28, 48, 58, 68) farthest away from said screen element (30).

18. The screen cylinder as recited in any of the preceding claims 11 - 17, **characterized in that** said massive circular ring (284, 484, 584, 684) has a surface purposed to be in contact with said non-composite polymeric material, said surface being provided with means (56) for increasing the contact area with the non-composite polymeric material.

19. The screen cylinder as recited in claim 11, **characterized in that** said at least one support element (14, 14', 44, 54) is at least partially embedded in said non-composite polymeric material.

20. The screen cylinder as recited in any of the preceding claims 11 - 19, **characterized in that** one of a reinforcing ring and a reinforcing shell (70) is arranged on at least one of the support elements (14, 14', 44, 54).

## Patentansprüche

1. Verfahren zum Herstellen eines Siebzylinders, wobei das Verfahren folgende Schritte umfasst:
- Herstellen eines runden Siebelements (30, 30') entweder aus Siebdrähten (12), die an Tragelementen (14, 44) befestigt sind, oder aus einem Blechglied, das an Tragelementen (14') befestigt ist;
∘ wobei das Siebelement (30, 30') eine Siebungsoberfläche (20), eine entgegensetzte Oberfläche, welche die Tragelemente (14, 14', 44, 54) umfasst, und Siebungsöffnungen in Form von entweder Siebungsschlitzen, die zwischen benachbarten Siebdrähten (12) freibleiben, oder gefrästen oder gebohrten Perforierungen in dem Blechglied aufweist;
∘ wobei das runde Siebelement (30, 30') zwei axiale Enden aufweist,
- Herstellen eines massiven kreisförmigen Rings (284, 484, 584, 684) zum Befestigen an einem Ende des runden Siebelements (30, 30'), wobei der massive kreisförmige Ring (284, 484, 584, 684) eine radiale Endoberfläche aufweist,
- Befestigen des runden Siebelements (30, 30') an dem massiven kreisförmigen Ring (284, 484, 584, 684), wobei die Endoberfläche des massiven kreisförmigen Rings (284, 484, 584, 684) mindestens teilweise eine Endoberfläche des Siebzylinders (10) bildet,
**dadurch gekennzeichnet, dass** das Befestigen durchgeführt wird durch:
- Anordnen des massiven kreisförmigen Rings (284, 484, 584, 684) auf einer Arbeitsoberfläche, derart, dass die Endoberfläche des massiven kreisförmigen Rings (284, 484, 584, 684) an der Arbeitsoberfläche anliegt,
- Positionieren des runden Siebelements (30, 30') koaxial zu dem massiven kreisförmigen Ring (284, 484, 584, 684) über der Arbeitsoberfläche,
- Anordnen einer Barriere (32) an der Siebungsoberfläche (20), derart, dass sich die Barriere (32) von der Arbeitsoberfläche bis mindestens zu dem Niveau des untersten Tragelements (14, 14', 44, 54) erstreckt,
- Einbringen von polymerem Nicht-Verbundstoff (282, 482, 582, 682) in einen im Allgemeinen kreisförmigen Hohlraum, der durch mindestens die Barriere (32) und den massiven kreisförmigen Ring (284, 484, 584, 684) gebildet wird, derart, dass mindestens das unterste Tragelement (14, 14', 44, 54) in Kontakt mit dem polymeren Nicht-Verbundstoff (282, 482, 582, 682) angeordnet wird, und
- Härtenlassen des polymeren Nicht-Verbundstoffes (282, 482, 582, 682),
- wodurch der massive kreisförmige Ring (284, 484, 584, 684) an dem runden Siebelement (30, 30') und an seinem untersten Tragelement (14, 14' 44, 54) mittels des gehärteten polymeren Nicht-Verbundstoffes (282, 482, 582, 682) befestigt wird.

2. Verfahren nach Anspruch 1, **gekennzeichnet durch** Einbetten von mindestens dem untersten Tragelement (14, 14', 44, 54) mindestens teilweise in dem polymeren Nicht-Verbundstoff (282, 482, 582, 682).

3. Verfahren nach einem beliebigen der vorhergehenden Ansprüche, **gekennzeichnet durch** Anordnen des runden Siebelements (30, 30') koaxial zu dem massiven kreisförmigen Ring (284, 484, 584, 684) über der Arbeitsoberfläche, um eine Schicht aus polymerem Nicht-Verbundstoff außerhalb des axialen Endes des Siebelements (30, 30') anzuordnen.

4. Verfahren nach einem beliebigen der vorhergehenden Ansprüche, **gekennzeichnet durch** Anordnen des runden Siebelements (30, 30') koaxial zu dem massiven kreisförmigen Ring (484), um auf einem sich radial erstreckenden Flanschabschnitt (488) des massiven kreisförmigen Rings (484) zu stehen.

5. Verfahren nach einem beliebigen der vorhergehenden Ansprüche 1 bis 3, **gekennzeichnet durch** Positionieren des runden Siebelements (30, 30') koaxial zu dem massiven kreisförmigen Ring (484) in einer Entfernung über einem sich radial erstreckenden Flanschabschnitt (488) des massiven kreisförmigen Rings (484), um eine Schicht aus polymerem Nicht-Verbundstoff zwischen dem Ende des Siebelements (30, 30') und dem sich radial erstreckenden Flanschabschnitt (488) des massiven kreisförmigen Rings (484) anzuordnen.

6. Verfahren nach einem beliebigen der vorhergehenden Ansprüche, **gekennzeichnet durch** Verwenden von einem aus der Gruppe umfassend einen Polyester, einen Vinylester, ein Epoxid, ein Polyurethan und ein Polyurethangießelastomer als polymeren Nicht-Verbundstoff.

7. Verfahren nach einem beliebigen der vorhergehenden Ansprüche, **gekennzeichnet durch** Anordnen von entweder einem Verstärkungsring oder einem Verstärkungsmantel (70) an mindestens einem der Tragelemente (14, 14', 44, 54).

8. Verfahren nach Anspruch 7, **gekennzeichnet durch** Anordnen von entweder einem Verstärkungsring oder einem Verstärkungsmantel (70) mindestens teilweise in den polymeren Nicht-Verbundstoff eingebettet.

9. Verfahren nach einem beliebigen der vorhergehenden Ansprüche, **gekennzeichnet durch** Versehen von mindestens einer Oberfläche (50, 52, 60) des massiven kreisförmigen Rings (284, 484, 584, 684) mit Abmessungen, um einem Tragflansch zu entsprechen, der an einem Gehäuse einer Siebungsvorrichtung angeordnet ist, zum Ausrichten und Tragen des Siebzylinders (10) an dem Tragflansch.

10. Verfahren nach einem beliebigen der vorhergehenden Ansprüche, **gekennzeichnet durch** Versehen des massiven kreisförmigen Rings (284, 484, 584, 684) mit mindestens einem aus der Gruppe umfassend Löcher (34, 46) zum Befestigen des Siebzylinders an dem Siebgehäuse und Gewindelöcher zum Befestigen der Augenschrauben für die Anbringung oder Entfernung des Siebzylinders.

11. Siebzylinder, umfassend:
- ein rundes Siebelement (30, 30') und zwei Endringe;
- wobei das runde Siebelement (30, 30') aus mindestens einem aus der Gruppe umfassend eine Anzahl von Siebdrähten (12), die an Tragelementen (14, 44, 54) befestigt sind, und ein Blechglied (30'), das an Tragelementen (14") befestigt ist, gebildet ist;
- wobei das runde Siebelement (30, 30') eine Siebungsoberfläche (20), eine entgegengesetzte Oberfläche, welche die Tragelemente (14, 14', 44, 54) aufweist, und Siebungsöffnungen, die sich durch das Siebelement in Form von einem aus der Gruppe umfassend Siebungsschlitze, die zwischen benachbarten Siebdrähten (12) freibleiben, und gefrästen oder gebohrten Perforierungen in dem Blechglied erstrecken;
- wobei die Endringe an dem Siebelement (30, 30')
an axialen Endflächen davon befestigt sind,
**dadurch gekennzeichnet, dass**
- mindestens einer der Endringe (28, 48, 58, 68) gebildet wird durch Befestigen eines massiven kreisförmigen Rings (284, 484, 584, 684) an der Endfläche des Siebelements (30, 30') und an mindestens einem Tragelement (14, 14', 44, 54) mittels eines polymeren Nicht-Verbundstoffes (282, 482, 582, 682), der zwischen den massiven kreisförmigen Ring, das Siebelement und das mindestens eine Tragelement gegossen wird.

12. Siebzylinder nach Anspruch 11, **dadurch gekennzeichnet, dass** das Siebelement (30, 30') Löcher, Schlitze oder Öffnungen an der Endfläche aufweist, die sich bis zu der Siebungsoberfläche (20) erstreckend durch den polymeren Nicht-Verbundstoff (282, 482, 582, 682) gefüllt sind.

13. Siebzylinder nach Anspruch 11 oder 12, **dadurch gekennzeichnet, dass** der massive kreisförmige Ring (284, 484, 584, 684) eine axiale Abmessung aufweist, wobei die axiale Abmessung im Wesentlichen jener des Endrings (28, 48, 58, 68) entspricht.

14. Siebzylinder nach einem beliebigen der vorhergehenden Ansprüche 11-13, **dadurch gekennzeichnet, dass** der massive kreisförmige Ring (284, 484, 584, 684) zwei koaxiale Grenzflächen aufweist, wobei eine erste Grenzfläche (IB) in nächster Nähe des Siebelements (30) angeordnet ist und eine zweite Grenzfläche (IIB) weiter davon entfernt ist.

15. Siebzylinder nach Anspruch 14, **dadurch gekennzeichnet, dass** die zweite Grenzfläche (IIB) des massiven kreisförmigen Rings (284, 484, 584, 684) mit Mitteln zum mittigen Ausrichten des Siebzylinders (10) innerhalb der Siebungsvorrichtung versehen ist.

16. Siebzylinder nach Anspruch 14, **dadurch gekennzeichnet, dass** die zweite Grenzfläche (IIB) mit Oberflächen (50, 52, 60) versehen ist, die derart bemessen sind, dass sie den Abmessungen der Befestigungs- oder Tragelemente entsprechen, die in der Siebungsvorrichtung vorgesehen sind.

17. Siebzylinder nach einem beliebigen der vorhergehenden Ansprüche 11-16, **dadurch gekennzeichnet, dass** sich der Endring (28, 48, 58, 68) in radialer Richtung von der Siebungsoberfläche (20) zu einer Oberfläche des massiven kreisförmigen Rings (28, 48, 58, 68), die am weitesten von dem Siebelement (30) entfernt ist, erstreckt.

18. Siebzylinder nach einem beliebigen der vorhergehenden Ansprüche 11-17, **dadurch gekennzeichnet, dass** der massive kreisförmige Ring (284, 484, 584, 684) eine Oberfläche aufweist, die dazu bestimmt ist, mit dem polymeren Nicht-Verbundstoff in Kontakt zu sein, wobei die Oberfläche mit Mitteln (56) zum Vergrößern der Kontaktfläche mit dem polymeren Nicht-Verbundstoff versehen ist.

19. Siebzylinder nach Anspruch 11, **dadurch gekennzeichnet, dass** das mindestens eine Tragelement (14, 14', 44, 54) mindestens teilweise in dem polymeren Nicht-Verbundstoff eingebettet ist.

20. Siebzylinder nach einem beliebigen der vorhergehenden Ansprüche 11-19, **dadurch gekennzeichnet, dass** entweder ein Verstärkungsring oder ein Verstärkungsmantel (70) an mindestens einem der Tragelemente (14, 14', 44, 54) angeordnet ist.

## Revendications

1. Procédé pour la fabrication d'un cylindre de tamisage, ledit procédé comprenant les étapes suivantes
- fabrication d'un élément de tamisage circulaire (30, 30') de l'un parmi des grilles de tamisage (12) fixées à des éléments de support (14, 44) et un élément en feuille métallique fixé aux éléments de support (14') ;
∘ ledit élément de tamisage (30, 30') possédant une surface de tamisage (20), une surface opposée incluant les éléments de support (14, 14', 44, 54), et des ouvertures de tamisage sous la forme de fentes de tamisage demeurant entre des grilles de tamisage (12) adjacentes, et des perforations percées ou laminées dans l'élément en feuille métallique ;
∘ ledit élément de tamisage circulaire (30, 30') possédant deux extrémités axiales,
- fabrication d'un anneau circulaire massif (284, 484, 584, 684) destiné à être fixé à une extrémité dudit élément de tamisage circulaire (30, 30'), ledit anneau circulaire massif (284, 484, 584, 684) possédant une surface terminale radiale,
- fixation dudit élément de tamisage circulaire (30, 30') audit anneau circulaire massif (284, 484, 584, 684), ladite surface terminale dudit anneau circulaire massif (284, 484, 584, 684) formant au moins partiellement une surface terminale du cylindre de tamisage (10),
**caractérisé en ce que** ladite fixation est réalisée en
- disposant ledit anneau circulaire massif (284, 484, 584, 684) sur une surface de travail de manière à ce que ladite surface terminale dudit anneau circulaire massif (284, 484, 584, 684) repose contre la surface de travail,
- positionnant ledit élément de tamisage circulaire (30, 30') coaxialement avec ledit anneau circulaire massif (284, 484, 584, 684) au-dessus de ladite surface de travail,
- plaçant une barrière (32) contre la surface de tamisage (20) de manière à ce que la barrière (32) s'étende à partir de ladite surface de travail au moins jusqu'au niveau de l'élément de support (14, 14', 44, 54) le plus bas,
- application d'un matériau polymère non composite (282, 482, 582, 682) dans une cavité généralement circulaire formée au moins par la barrière (32), et l'anneau circulaire massif (284, 484, 584, 684) de manière à ce qu'au moins l'élément de support (14, 14', 44, 54) le plus bas soit agencé en contact avec ledit matériau polymère non composite (282, 482, 582, 682), et
- durcissement du matériau polymère non composite (282, 482, 582, 682),
- dans lequel l'anneau circulaire massif (284, 484, 584, 684) est relié à l'élément de tamisage circulaire (30, 30') et à son élément de support (14, 14', 44, 54) le plus bas, au moyen du matériau polymère non composite (282, 482, 582, 682) durci.

2. Procédé selon la revendication 1, **caractérisé par** l'enrobage d'au moins l'élément de support (14, 14', 44, 54) le plus bas au moins partiellement dans ledit matériau polymère non composite (282, 482, 582, 682).

3. Procédé selon l'une quelconque des revendications précédentes, **caractérisé par** le positionnement dudit élément de tamisage circulaire (30, 30') coaxialement avec ledit anneau circulaire massif (284, 484, 584, 684) au-dessus de ladite surface de travail, pour arranger une couche de matériau polymère non composite à l'extérieur de l'extrémité axiale de l'élément de tamisage (30, 30').

4. Procédé selon l'une quelconque des revendications précédentes, **caractérisé par** le positionnement dudit élément de tamisage circulaire (30, 30') coaxialement avec ledit anneau circulaire massif (484) pour le poser sur une partie de rebord (488) s'étendant radialement de l'anneau circulaire massif (484).

5. Procédé selon l'une quelconque des revendications précédentes 1 - 3, **caractérisé par** le positionnement dudit élément de tamisage circulaire (30, 30') coaxialement avec ledit anneau circulaire massif (484) à une distance au-dessus d'une partie de rebord (488) s'étendant radialement de l'anneau circulaire massif (484), pour arranger une couche de matériau polymère non composite entre l'extrémité de l'élément de tamisage (30, 30') et la partie de rebord (488) s'étendant radialement de l'anneau circulaire massif (484) .

6. Procédé selon l'une quelconque des revendications précédentes, **caractérisé par** l'utilisation de l'un parmi un polyester, un ester vinylique, une résine époxy, un polyuréthane et un élastomère de polyuréthane, comme étant ledit matériau polymère non composite.

7. Procédé selon l'une quelconque des revendications précédentes, **caractérisé par** la disposition d'un anneau de renfort et d'une coque de renfort (70) sur au moins l'un des éléments de support (14, 14', 44, 54) .

8. Procédé selon la revendication 7, **caractérisé par** la disposition d'un anneau de renfort ou d'une coque de renfort (70) au moins partiellement enrobé(e) dans le matériau polymère non composite.

9. Procédé selon l'une quelconque des revendications précédentes, **caractérisé par** la mise à disposition d'au moins une surface (50, 52, 60) de l'anneau circulaire massif (284, 484, 584, 684) avec des dimensions correspondant à un rebord de support arrangé sur un boîtier d'un appareil de tamisage, pour l'alignement et le support dudit cylindre de tamisage (10) par rapport audit rebord de support.

10. Procédé selon l'une quelconque des revendications précédentes, **caractérisé par** la mise à disposition de l'anneau circulaire massif (284, 484, 584, 684) avec au moins l'un parmi des trous (34, 46) pour la fixation du cylindre de tamisage sur ledit boîtier de tamisage, et des trous filetés pour la fixation des boulons à oeil pour l'installation ou le retrait du cylindre de tamisage.

11. Cylindre de tamisage comprenant :
• un élément de tamisage circulaire (30, 30') et deux anneaux terminaux ;
• l'élément de tamisage circulaire (30, 30') étant constitué d'au moins l'un parmi une pluralité de grilles de tamisage (12) reliées à des éléments de support (14, 44, 54), et un élément en feuille métallique (30') relié à des éléments de support (14') ;
• l'élément de tamisage circulaire (30, 30') possédant une surface de tamisage (20), une surface opposée incluant les éléments de support (14, 14', 44, 54), et des ouvertures de tamisage s'étendant à travers ledit élément de tamisage, sous la forme de fentes de tamisage demeurant entre des grilles de tamisage (12) adjacentes, ou de perforations percées ou laminées dans l'élément en feuille métallique ;
• les anneaux terminaux étant fixés audit élément de tamisage (30, 30') dans des régions d'extrémité axiale de celui-ci,
**caractérisé en ce que**
• au moins l'un desdits anneaux terminaux (28, 48, 58, 68) est formé en fixant un anneau circulaire massif (284, 484, 584, 684) à ladite région d'extrémité dudit élément de tamisage (30, 30') et à au moins un élément de support (14, 14', 44, 54) coulé entre l'anneau circulaire massif, l'élément de tamisage et l'au moins un élément de support.

12. Cylindre de tamisage selon la revendication 11, **caractérisé en ce que** l'élément de tamisage (30, 30') possède des trous, des fentes ou des ouvertures dans la région d'extrémité remplie par le matériau polymère non composite (282, 482, 582, 682), s'étendant jusqu'à la surface de tamisage (20).

13. Cylindre de tamisage selon la revendication 11 ou 12, **caractérisé en ce que** ledit anneau circulaire massif (284, 484, 584, 684) présente une dimension axiale, ladite dimension axiale correspondant essentiellement à celle de l'anneau terminal (28, 48, 58, 68).

14. Cylindre de tamisage selon l'une quelconque des revendications précédentes 11 - 13, **caractérisé en ce que** ledit anneau circulaire massif (284, 484, 584, 684) comporte deux régions frontalières coaxiales, une première région frontalière (IB) étant très proche dudit élément de tamisage (30) et une deuxième région frontalière (IIB) étant plus éloignée de celui-ci.

15. Cylindre de tamisage selon la revendication 14, **caractérisé en ce que** ladite deuxième région frontalière (IIB) dudit anneau circulaire massif (284, 484, 584, 684) est dotée de moyens pour l'alignement du cylindre de tamisage (10) de façon centrale à l'intérieur de l'appareil de tamisage.

16. Cylindre de tamisage selon la revendication 14, **caractérisé en ce que** ladite deuxième région frontalière (IIB) est dotée de surfaces (50, 52, 60) dimensionnées pour correspondre aux dimensions des éléments de support ou de fixation prévus dans l'appareil de tamisage.

17. Cylindre de tamisage selon l'une quelconque des revendications précédentes 11 - 16, **caractérisé en ce que** ledit anneau terminal (28, 48, 58, 68) s'étend dans une direction radiale à partir de ladite surface de tamisage (20), vers une surface dudit anneau circulaire massif (284, 484, 584, 684) la plus éloignée dudit élément de tamisage (30).

18. Cylindre de tamisage selon l'une quelconque des revendications précédentes 11 - 17, **caractérisé en ce que** ledit anneau circulaire massif (284, 484, 584, 684) possède une surface destinée à être en contact avec ledit matériau polymère non composite, ladite surface étant dotée de moyens (56) permettant d'agrandir la zone de contact avec le matériau polymère non composite.

19. Cylindre de tamisage selon la revendication 11, **caractérisé en ce que** ledit au moins un élément de support (14, 14', 44, 54) est au moins partiellement enrobé dans ledit matériau polymère non composite.

20. Cylindre de tamisage selon l'une quelconque des revendications précédentes 11 - 19, **caractérisé en ce que** l'un parmi un anneau de renfort et une coque de renfort (70) est agencé(e) sur au moins l'un des éléments de support (14, 14', 44, 54).
